(19) Europäisches Patentamt
European Patent Office
Office européen des brevets

(11) **EP 4 254 556 A1**

(12) **EUROPEAN PATENT APPLICATION**
published in accordance with Art. 153(4) EPC

(43) Date of publication:
04.10.2023 Bulletin 2023/40

(21) Application number: 21908545.3

(22) Date of filing: 07.07.2021

(51) International Patent Classification (IPC):
$H01M\ 4/505$ (2010.01)    $H01M\ 4/525$ (2010.01)
$H01M\ 10/0525$ (2010.01)

(52) Cooperative Patent Classification (CPC):
H01M 4/505; H01M 4/525; H01M 10/0525;
Y02E 60/10

(86) International application number:
PCT/CN2021/104957

(87) International publication number:
WO 2022/134540 (30.06.2022 Gazette 2022/26)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 25.12.2020 CN 202011560549

(71) Applicant: **Ningde Amperex Technology Limited
Zhangwan Town, Jiaocheng District
Ningde City
Fujian 352100 (CN)**

(72) Inventor: **LIU, Wenyuan
Ningde City, Fujian 352100 (CN)**

(74) Representative: **Icosa
83 avenue Denfert-Rochereau
75014 Paris (FR)**

(54) **POSITIVE ELECTRODE MATERIAL, ELECTROCHEMICAL DEVICE, AND ELECTRONIC DEVICE**

(57)    This application provides a positive electrode material, an electrochemical apparatus, and an electronic apparatus. The positive electrode material includes at least one of element Al or element Zr; and positive electrode material particles satisfies $0.01 \leq (D_v99_a - D_v99_b)/D_v99_b \leq 0.5$, where $D_v99_a$ and $D_v99_b$ are $D_v99$ values of the positive electrode material particles measured before and after ultrasonic treatment respectively. The positive electrode material provided in this application can improve processability of positive electrode materials and cycling performance of electrochemical apparatuses.

EP 4 254 556 A1

**Description**

**CROSS-REFERENCE TO RELATED APPLICATIONS**

This application claims priority to Chinese Patent Application No. 202011560549.8, filed on December 25, 2020 and entitled "POSITIVE ELECTRODE MATERIAL, ELECTROCHEMICAL APPARATUS, AND ELECTRONIC APPARATUS", which is incorporated herein by reference in its entirety.

**TECHNICAL FIELD**

This application relates to the field of electrochemical technologies, and in particular, to a positive electrode material, an electrochemical apparatus, and an electronic apparatus.

**BACKGROUND**

Electrochemical apparatuses (for example, lithium-ion batteries) are widely used in various fields. With the progress of society, electrochemical apparatuses are required to have better cycling performance and rate performance.
In some technologies, particle sizes of positive electrode materials are reduced to improve rate performance of electrochemical apparatuses. However, positive electrode materials with a small particle size have poor processability, are prone to self-agglomeration, and easily produce particles and bubbles during coating. In addition, uneven weight distribution easily occurs during high-speed coating, which leads to increased polarization of the electrochemical apparatuses, and easily causes local lithium precipitation, affecting cycling performance and rate performance of the electrochemical apparatuses.

**SUMMARY**

In view of the foregoing shortcomings of the prior art, this application improves processability and cycling performance of positive electrode materials.
This application provides a positive electrode material, where the positive electrode material includes at least one of element Al or element Zr; and
positive electrode material particles satisfies $0.01 \leq (D_v99_a - D_v99_b)/D_v99_b \leq 0.5$; where $D_v99_a$ and $D_v99_b$ are $D_v99$ values of the positive electrode material particles measured before and after ultrasonic treatment respectively.
In some embodiments, the positive electrode material particles satisfies $0.01 \leq (D_v50_a - D_v50_b)/D_v50_b \leq 0.30$; where $D_v50_a$ and $D_v50_b$ are $D_v50$ values of the positive electrode material particles measured before and after ultrasonic treatment respectively.
In some embodiments, the positive electrode material satisfies at least one of the following conditions (a) to (d):

(a) $D_v50_a$ satisfies $2~\mu m \leq D_v50_a \leq 17~\mu m$;
(b) $D_v99_a$ satisfies $6~\mu m < D_v99_a \leq 40~\mu m$;
(c) a specific surface area BET of the positive electrode material satisfies $0.1~m^2/g \leq BET \leq 0.9~m^2/g$; and
(d) the positive electrode material includes primary particles, and an average particle size A of the primary particles satisfies $200~nm \leq A \leq 4~\mu m$.

In some embodiments, the positive electrode material satisfies at least one of the following conditions (e) to (i):

(e) $D_v50_a$ satisfies $3~\mu m \leq D_v50_a \leq 6~\mu m$;
(f) $D_v99_a$ satisfies $8~\mu m \leq D_v99_a \leq 30~\mu m$;
(g) a specific surface area BET of the positive electrode material satisfies $0.5~m^2/g \leq BET \leq 0.8~m^2/g$;
(h) the positive electrode material includes primary particles, and an average particle size A of the primary particles satisfies $1~\mu m \leq A \leq 4~\mu m$; and
(i) a mass percentage of element Al in the positive electrode material ranges from 0.05% to 0.5%.

In some embodiments, the positive electrode material includes first particles and second particles, a particle size of the first particle is D1, a particle size of the second particle is D2, and D2<D1.
In some embodiments, the first particles and the second particles satisfy at least one of the following conditions (j) and (k):

(j) $0.01 \leq (D_v50_{a1} - D_v50_{b1})/D_v50_{b1} \leq 0.1$; and

(k) $0.01 \leq (D_v99_{a1}-D_v99_{b1})/D_v99_{b1} \leq 0.25$;
where $D_v50_{a1}$ and $D_v50_{b1}$ are $D_v50$ values of the first particles measured before and after ultrasonic treatment respectively, and $D_v99_{a1}$ and $D_v99_{b1}$ are $D_v99$ values of the first particles measured before and after ultrasonic treatment respectively.

In some embodiments, the second particles satisfies at least one of the following conditions (1) and (m):

(1) $0.05 \leq (D_v50_{a2}-D_v50_{b2})/D_v50_{b2} \leq 0.3$; and
(m) $0.2 \leq (D_v99_{a2}-D_v99_{b2})/D_v99_{b2} \leq 1$;
where $D_v50_{a2}$ and $D_v50_{b2}$ are $D_v50$ values of the second particles measured before and after ultrasonic treatment respectively, and $D_v99_{a2}$ and $D_v99_{b2}$ are $D_v99$ values of the second particles measured before and after ultrasonic treatment respectively.

In some embodiments, the first particles and the second particles satisfy at least one of conditions (n) to (p):

(n) $7~\mu m \leq D_v50_{a1} \leq 15~\mu m$;
(o) $2~\mu m \leq D_v50_{a2} \leq 8~\mu m$; and
(p) $1.5 \leq D_v50_{a1}/D_v50_{a2} \leq 5.5$;
where $D_v50_{a1}$ and $D_v50_{a2}$ are $D_v50$ values of the first particles and the second particles measured before ultrasonic treatment respectively.

In some embodiments, the first particles includes primary particles, an average particle size $A_1$ of the primary particles in the first particles satisfies $300~nm \leq A_1 \leq 800~nm$; and/or the second particles includes primary particles, an average particle size $A_2$ of the primary particles in the second particles satisfies $0.2~\mu m \leq A_2 \leq 4~\mu m$.

This application further provides an electrochemical apparatus, including:
a positive electrode, a negative electrode, and a separator disposed between the positive electrode and the negative electrode; where the positive electrode includes a positive electrode current collector and a positive electrode active substance layer disposed on the positive electrode current collector, and the positive electrode active substance layer includes the positive electrode material according to any one of the foregoing embodiments.

This application further provides an electronic apparatus, including the foregoing electrochemical apparatus.

This application provides a positive electrode material, an electrochemical apparatus, and an electronic apparatus. The positive electrode material includes at least one of element Al or element Zr; and positive electrode material particles satisfies $0.01 \leq (D_v99_{a}-D_v99_{b})/D_v99_{b} \leq 0.5$, where $D_v99_{a}$ and $D_v99_{b}$ are $D_v99$ values of the positive electrode material particles measured before and after ultrasonic treatment respectively. The positive electrode material provided in this application can improve processability of positive electrode materials and cycling performance of electrochemical apparatuses.

## DESCRIPTION OF EMBODIMENTS

The following embodiments may help persons skilled in the art to understand this application more comprehensively, but do not limit this application in any manner.

In the related art, a particle size of a material is reduced to improve rate performance of an electrochemical apparatus. However, a positive electrode material with a small particle size has poor processability, and is prone to self-agglomeration, leading to producing particles and bubbles during coating. In addition, uneven weight distribution easily occurs during high-speed coating, which leads to increased polarization of the electrochemical apparatus, lithium precipitation occurs, affecting cycling performance and rate performance of the electrochemical apparatus, and causing a significant temperature rise in the electrochemical apparatus.

To solve at least part of the foregoing problems, some embodiments of this application provide a positive electrode material, where the positive electrode material includes at least one of element Al or element Zr; and positive electrode material particles satisfies $0.01 \leq (D_v99_{a}-D_v99_{b})/D_v99_{b} \leq 0.5$. $D_v99_{a}$ and $D_v99_{b}$ are $D_v99$ values of the positive electrode material particles measured before and after ultrasonic treatment respectively.

In some embodiments of this application, the positive electrode material includes positive electrode material particles, and the positive electrode material may be, for example, a lithium cobalt oxide material containing at least one of element Al or element Zr. In some embodiments, Al may be present in a coating layer on a surface of the positive electrode material, and Zr may be doped in the positive electrode material. $0.01 \leq (D_v99_{a}-D_v99_{b})/D_v99_{b} \leq 0.5$ indicates a relatively small change in $D_v99$ of the positive electrode material particles before and after ultrasonic treatment, so it can be known that the positive electrode material has minor or nearly no self-agglomeration, thus ensuring the processability of the positive electrode material, reducing uneven distribution of the positive electrode material during coating, and reducing local lithium precipitation of the electrochemical apparatus. When the value of $(D_v99_a-D_v99_b)/D_v99_b$ is excessively large, the electrochemical apparatus using such positive electrode material has poor cycling performance and high temperature rise. In this application, it is controlled that $0.01 \leq (D_v99_a-D_v99_b)/D_v99_b \leq 0.5$, which can improve processability of the positive electrode material, prevent lithium precipitation, ensure cycling performance, and reduce temperature rise of the electrochemical apparatus using such positive electrode material.

In some embodiments of this application, particle sizes before and after ultrasonic treatment are analyzed using a Mastersizer 3000 laser particle size distribution tester. Laser particle size measurement measures particle size distribution based on a principle that particles of different sizes can cause laser to scatter at different intensities. $D_v50$ is a particle size where the cumulative volume distribution by volume reaches 50% as counted from the small particle size side. $D_v99$ is a particle size where the cumulative volume distribution by volume reaches 99% as counted from the small particle size side. When the positive electrode material particles before and after ultrasonic treatment are measured using the laser particle size analyzer, measurement conditions are the same except for the pre-ultrasonic treatment. The dispersant is water, the dispersion method is external ultrasound, the ultrasound time is 5 min, the ultrasound intensity is 40 KHz 180 w, and the sample injection operation is injecting all.

For the existing electrochemical apparatuses, in testing positive electrode materials used in the electrochemical apparatuses, the positive electrode materials in the electrochemical apparatuses can be obtained by using the following method in a drying room with 2% relative humidity. One electrochemical apparatus is selected, fully discharged, and then disassembled to obtain a positive electrode. The positive electrode is soaked in NMP (N-methylpyrrolidone) solution for 24h, and calcined in air atmosphere at 650°C for 5h, an active substance layer is scrapped off from the positive electrode, the obtained positive electrode material powder is ground evenly and sieved with a 400-mesh sieve. Then, the positive electrode material powder passing through the 400-mesh sieve are collected, which is the positive electrode material.

In some embodiments, the positive electrode material particles satisfies $0.01 \leq (D_v50_a-D_v50_b)/D_v50_b \leq 0.30$, where $D_v50_a$ and $D_v50_b$ are $D_v50$ values of the positive electrode material particles measured before and after ultrasonic treatment respectively. In some embodiments, the positive electrode material particles have a relatively small change in $D_v50$ measured before and after ultrasonic treatment, so it can be known that the positive electrode material particles have minor or nearly no self-agglomeration, which helps improve cycling performance, reduce temperature rise, and prevent local lithium precipitation of the electrochemical apparatus using the positive electrode material.

In some embodiments of this application, $D_v50_a$ satisfies $2\ \mu m \leq D_v50_a \leq 17\ \mu m$, and in some embodiments, $D_v50_a$ satisfies $3\ \mu m \leq D_v50_a \leq 6\ \mu m$.

In some embodiments of this application, $D_v99_a$ satisfies $6\ \mu m \leq D_v99_a \leq 40\ \mu m$, and in some embodiments, $D_v99_a$ satisfies $8\ \mu m \leq D_v99_a \leq 30\ \mu m$.

In some embodiments, the particle size of the positive electrode material particle affects cycling performance and temperature rise of the electrochemical apparatus using the positive electrode material. A small particle size of the positive electrode material particle leads to lower cycling capacity retention rate and higher temperature rise of the electrochemical apparatus. Therefore, in some embodiments, minimum values of $D_v50_a$ and $D_v99_a$ are specified. In addition, a large particle size of the positive electrode material particle affects rate performance. Therefore, in some embodiments, maximum values of $D_v50_a$ and $D_v99_a$ are specified.

In some embodiments, a specific surface area BET of the positive electrode material satisfies $0.1\ m^2/g \leq BET \leq 0.9\ m^2/g$, and in some embodiments, a specific surface area BET of the positive electrode material satisfies $0.5\ m^2/g \leq BET \leq 0.8\ m^2/g$. In some embodiments, an excessively small specific surface area of the positive electrode material leads to poor rate performance, while an excessively large specific surface area of the positive electrode material leads to increased electrolyte consumption in the electrochemical apparatus using the positive electrode material.

In some embodiments, the positive electrode material includes primary particles, and an average particle size A of the primary particles satisfies $200\ nm \leq A \leq 4\ \mu m$. In some embodiments, the positive electrode material includes primary particles, and an average particle size A of the primary particles satisfies $1\ \mu m \leq A \leq 4\ \mu m$. In some embodiments, increasing the average particle size A of the primary particles helps improve the cycling performance of the electrochemical apparatus using the positive electrode material, so a minimum value of A is specified. However, an excessively large average particle size A of the primary particles leads to increased temperature rise and reduced kinetic performance of the electrochemical apparatus using the positive electrode material, so a maximum value of A is specified. In some embodiments, some particle sizes of the positive electrode material are measured using a scanning electron microscope. After the positive electrode material in this application is imaged through a 500x scanning electron microscope (ZEISS Sigma-02-33, Germany), 200 to 600 primary particles of the positive electrode material that have a complete shape and are not blocked are randomly selected from the electron microscope image, and an average value of the longest diameters of the primary particles in the microscope image is recorded as an average particle size.

In some embodiments of this application, a mass percentage of element Al in the positive electrode material ranges from 0.05% to 0.5%.

In some embodiments of this application, the positive electrode material includes first particles and second particles, a particle size of the first particle is D1, a particle size of the second particle is D2, and D2<D1. Taylor sieve system is used in some embodiments of this application. In some embodiments, the first particles and the second particles are obtained by using the following method: In a drying room with 2% relative humidity, some of the positive electrode material are taken, dispersed in an NMP solution, ultrasonically dispersed for 12h, and then stirred evenly to obtain a suspension. The suspension is slowly poured onto a 1500-mesh sieve while being stirred. Some small particles pass through the sieve and enter a filtrate, the filtrate is left standing for 24h, supernatant is poured off, and powder obtained after drying is the second particles in this application. Some large particles are left on the sieve, and powder obtained after drying is the first particles in this application.

In some embodiments, the first particles and the second particles satisfy $0.01 \leq (D_v50_{a1}-D_v50_{b1})/D_v50_{b1} \leq 0.1$. In some embodiments, the first particles and the second particles satisfy $0.01 \leq (D_v99_{a1}-D_v99_{b1})/D_v99_{b1} \leq 0.25$. $D_v50_{a1}$ and $D_v50_{b1}$ are $D_v50$ values of the first particles measured before and after ultrasonic treatment respectively, and $D_v99_{a1}$ and $D_v99_{b1}$ are $D_v99$ values of the first particles measured before and after ultrasonic treatment respectively.

In some embodiments, the second particles satisfies $0.05 \leq (D_v50_{a2}-D_v50_{b2})/D_v50_{b2} \leq 0.3$. In some embodiments, the second particles satisfies $0.2 \leq (D_v99_{a2}-D_v99_{b2})/D_v99_{b2} \leq 1$. $D_v50_{a2}$ and $D_v50_{b2}$ are $D_v50$ values of the second particles measured before and after ultrasonic treatment respectively, and $D_v99_{a2}$ and $D_v99_{b2}$ are $D_v99$ values of the second particles measured before and after ultrasonic treatment respectively.

In some embodiments, when the first particles and the second particles satisfy the above conditions, it indicates that the first particles and second particles rarely agglomerate, thereby helping improve processability of the positive electrode material, and preventing lithium precipitation in the electrochemical apparatus using the positive electrode material.

In some embodiments, the first particles and the second particles satisfy $7 \mu m \leq D_v50_{a1} \leq 15 \mu m$.

In some embodiments, the first particles and the second particles satisfy $2 \mu m \leq D_v50_{a2} \leq 8 \mu m$.

In some embodiments, the first particles and the second particles satisfy $1.5 \leq D_v50_{a1}/D_v50_{a2} \leq 5.5$.

$D_v50_{a1}$ and $D_v50_{a2}$ are $D_v50$ values of the first particles and the second particles measured before ultrasonic treatment respectively.

In some embodiments, when $D_v50$ of the first particles and the second particles satisfies the foregoing conditions, a positive electrode active layer has a good compacted density and increases the energy density of the electrochemical apparatus.

In some embodiments, the first particles includes primary particles, and an average particle size $A_1$ of the primary particles in the first particles satisfies $300 nm \leq A_1 \leq 800 nm$.

In some embodiments, the first particles includes primary particles, and an average particle size $A_1$ of the primary particles in the first particles satisfies $500 nm \leq A_1 \leq 800 nm$.

In some embodiments, the second particles includes primary particles, and an average particle size $A_2$ of the primary particles in the second particles satisfies $0.2 \mu m \leq A_2 \leq 4 \mu m$.

In some embodiments, when the average particle size of the primary particles in at least one of the first particles or the second particles satisfies the foregoing conditions, electrochemical apparatuses have both good cycling performance and safety performance.

This application further provides an electrochemical apparatus, including a positive electrode, a negative electrode, and a separator.

In some embodiments of this application, the positive electrode of the foregoing electrochemical apparatus includes a positive electrode current collector and a positive electrode material disposed on the positive electrode current collector. The positive electrode material may be the positive electrode material according to any one of the foregoing embodiments.

In some embodiments, the positive electrode material includes a positive electrode material capable of absorbing and releasing lithium (Li). Examples of the positive electrode material capable of absorbing/releasing lithium (Li) may include lithium cobalt oxide, lithium nickel cobalt manganese oxide, lithium nickel cobalt aluminum oxide, lithium manganese oxide, lithium manganese iron phosphate, lithium vanadium phosphate, lithium vanadyl phosphate, lithium iron phosphate, lithium titanate, and lithium-rich manganese-based material.

Specifically, a chemical formula of lithium cobalt oxide may be chemical formula 1:

$$Li_xCo_aM1_bO_{2-c} \qquad \text{chemical formula 1}$$

M1 is selected from at least one of nickel (Ni), manganese (Mn), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), tungsten (W), yttrium (Y), lanthanum (La), zirconium (Zr), and silicon (Si), and values of x, a, b, and c are in the following ranges respectively: $0.8 \leq x \leq 1.2$, $0.8 \leq a \leq 1$, $0 \leq b \leq 0.2$, and $-0.1 \leq c \leq 0.2$.

A chemical formula of lithium nickel cobalt manganese oxide or lithium nickel cobalt aluminum oxide may be chemical formula 2:

$$Li_yNi_dM2_eO_{2-f} \qquad \text{chemical formula 2}$$

M2 is selected from at least one of cobalt (Co), manganese (Mn), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), tungsten (W), zirconium (Zr), and silicon (Si), and values of y, d, e, and f are in the following ranges respectively: $0.8 \leq y \leq 1.2$, $0.3 \leq d \leq 0.98$, $0.02 \leq e \leq 0.7$, and $-0.1 \leq f \leq 0.2$.

A chemical formula of lithium manganese oxide may be chemical formula 3:

$$Li_zMn_{2-g}M3_gO_{4-h} \qquad \text{chemical formula 3}$$

M3 is selected from at least one of cobalt (Co), nickel (Ni), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), and tungsten (W), and values of z, g, and h are in the following ranges: $0.8 \leq z \leq 1.2$, $0 \leq g \leq 1.0$, and $-0.2 \leq h \leq 0.2$.

In some embodiments, the positive electrode of the foregoing electrochemical apparatus may be added with a conductive agent or a positive electrode binder. In some embodiments of this application, the positive electrode further includes a carbon material, and the carbon material may include at least one of conductive carbon black, graphite, graphene, carbon nanotube, carbon fiber, or carbon black. The positive electrode binder may include at least one of polyvinylidene fluoride, vinylidene fluoride-hexafluoropropylene copolymer, styrene-acrylate copolymer, styrene-butadiene copolymer, polyamide, polyacrylonitrile, polyacrylate, polyacrylic acid, polyacrylate, sodium carboxymethylcellulose, polyvinyl acetate, polyvinylpyrrolidone, polyvinyl ether, polymethyl methacrylate, polytetrafluoroethylene, or polyhexafluoropropylene.

In some embodiments, the negative electrode includes a negative electrode current collector and a negative electrode material. The negative electrode material is located on the negative electrode current collector. In some embodiments, the negative electrode current collector may include at least one of copper foil, aluminum foil, nickel foil, or fluorocarbon current collectors. In some embodiments, the negative electrode material further includes a negative electrode conductive agent and/or a negative electrode binder. In some embodiments, the negative electrode binder may include at least one of carboxymethyl cellulose (CMC), polyacrylic acid, polyvinyl pyrrolidone, polyaniline, polyimide, polyamide-imide, polysiloxane, polymerized styrene butadiene rubber, epoxy resin, polyester resin, urethane resin, or polyfluorene. In some embodiments, a mass percentage of the negative electrode binder in the negative electrode material ranges from 0.5% to 10%. In some embodiments, the negative electrode conductive agent may include at least one of conductive carbon black, ketjen black, acetylene black, carbon nanotube, VGCF (Vapor Grown Carbon Fiber, vapor grown carbon fiber), or graphene.

In some embodiments, the separator includes at least one of polyethylene, polypropylene, polyvinylidene fluoride, polyethylene terephthalate, polyimide, or aramid. For example, polyethylene is selected from at least one of high-density polyethylene, low-density polyethylene, or ultra-high molecular weight polyethylene. Especially, polyethylene and polypropylene have a good effect on preventing short circuits, and can improve stability of a battery through a shutdown effect.

This application further provides an electronic apparatus, including the electrochemical apparatus according to any one of the foregoing embodiments. The electronic apparatus in this application is not particularly limited, and the electronic apparatus may be any known electronic apparatus in the prior art. In some embodiments, electronic apparatuses may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, and the like. For example, an electronic apparatus includes a cell phone including a lithium-ion battery.

To better illustrate the beneficial effects of the electrolyte proposed in the embodiments of this application, the following will provide description with reference to examples and comparative examples.

Example 1:

Preparation of positive electrode material: A $Ni_{0.8}Co_{0.1}Mn_{0.1}(OH)_2$ precursor was prepared using the intermittent co-precipitation method to obtain a precursor with a Span of 0.60 (Span=$(D_v90_{a3} - D_v10_{a3})/D_v50_{a3}$, where $D_v90_{a3}$, $D_v10_{a3}$, and $D_v50_{a3}$ were particle sizes of the precursor measured before ultrasonic treatment), a BET of 10.2 $m^2/g$, and $D_v50_{a3}$ of 10.5 $\mu m$. The precursor and LiOH were mixed at a molar ratio of Li/(Ni+Co+Mn)=1.03, a mixture was subjected to primary sintering at a primary sintering temperature of 820°C for 16h, washed with water, and dried to obtain a primary material. The primary material was crushed with a crushing air pressure of 0.4 MPa, washed with water, and then mixed uniformly with $Al(OH)_3$ at a mass ratio of Al/(Ni+Co+Mn)=0.001. The mixture was sintered at 600°C for 6h, and sieved through a single-layer 325-mesh vibrating sieve to obtain a positive electrode material. Parameters of the positive electrode material obtained are shown as Example 1 data in Table 2.

Preparation of positive electrode: The positive electrode material, a conductive agent Super P, and a binder polyvinylidene fluoride were mixed at a weight ratio of 97.9:0.4:1.7, N-methylpyrrolidone (NMP) was added, and the mixture was stirred well under the action of a vacuum mixer to obtain a positive electrode slurry. Then, the positive electrode slurry was applied uniformly on two surfaces of an aluminum foil positive electrode current collector, followed by drying, cold pressing, cutting, and slitting, and then was dried under vacuum to obtain a positive electrode.

Preparation of negative electrode: A negative electrode active material artificial graphite, a thickener sodium carboxymethyl cellulose, and a binder styrene-butadiene rubber were mixed at a weight ratio of 97:1:2, deionized water was added, and the resulting mixture was stirred by a vacuum mixer to obtain a negative electrode slurry. Then, the negative electrode slurry was applied uniformly on two surfaces of a copper foil negative electrode current collector, followed by drying, cold pressing, cutting, and slitting, and then was dried under vacuum to obtain a negative electrode.

Preparation of electrolyte: Ethylene carbonate, propylene carbonate, and dimethyl carbonate were mixed uniformly at a ratio of 2:2:6 in a dried argon atmosphere glove box. Lithium salt $LiPF_6$ was added so that concentration of the lithium salt in a finally obtained electrolyte is 1.10 mol/L. Then, 1% vinylene carbonate was added based on total weight of the electrolyte, and the solution was uniformly mixed to obtain an electrolyte.

Preparation of battery: With a polyethylene porous polymeric film as a separator, the positive electrode, the separator, and the negative electrode were stacked in sequence, so that the separator was placed between the positive and negative electrode for isolation, and the stack was wound to obtain an electrode assembly. The electrode assembly was put in an outer package aluminum-plastic film, the electrolyte was injected, and the outer package was sealed, followed by processes such as formation, degassing, and trimming to obtain a lithium-ion battery.

Examples 2 to 12:

Examples 2 to 12 differ from Example 1 in that: at least one of the precursor Span, precursor BET, precursor $D_v50_{a3}$, and primary sintering temperature for preparation of the positive electrode material is different. The specific parameters are shown in Table 1.

Example 13:

Example 13 differs from Example 1 in the positive electrode material preparation method. The positive electrode material preparation method used in Example 13 is as follows:

A $Ni_{0.8}Co_{0.1}Mn_{0.1}(OH)_2$ precursor was prepared by using intermittent co-precipitation method to obtain a precursor with a Span of 0.65, a BET of 16 $m^2$/g, and $D_v50_{a3}$ of 4.5 $\mu$m, and then the precursor, LiOH, and $ZrO_2$ were mixed at a molar ratio of Li/(Ni+Co+Mn)=1.03 and a mass ratio of Zr/(Ni+Co+Mn)=0.003. The mixture was subjected to primary sintering at a primary sintering temperature of 850°C for 16h, washed with water, and dried to obtain a primary material. The primary material was crushed with a crushing air pressure of 0.6 MPa, washed with water, and then mixed uniformly with $Al(OH)_3$ at a mass ratio of Al/(Ni+Co+Mn)=0.001. The mixture was sintered at 600°C for 6h, and sieved through a double-layer vibrating sieve with 254 meshes at the upper layer and 325 meshes at the lower layer to obtain a positive electrode material.

Examples 14 to 16:

Examples 14 to 16 differ from Example 13 in that: at least one of the primary sintering temperature and doping content for preparation of the positive electrode material is different. The specific parameters are shown in Table 3.

Examples 17 to 35:

Examples 17 to 35 differ from Example 1 in that: the positive electrode material used in Examples 17 to 35 is obtained by mixing any two of the positive electrode materials in Examples 1 to 16. The specific parameters are shown in Table 5.

Comparative Example 1:

Comparative Example 1 differs from Example 1 in the positive electrode material preparation method. The positive electrode material preparation method used in Comparative Example 1 is as follows:

A $Ni_{0.8}Co_{0.1}Mn_{0.1}(OH)_2$ precursor was prepared by using continuous co-precipitation method to obtain a precursor with a Span of 1.1, a BET of 18 $m^2$/g, and $D_v50_{a3}$ of 4.5 $\mu$m, and then the precursor and LiOH were mixed at a molar ratio of Li/(Ni+Co+Mn)=1.03. The mixture was subjected to primary sintering at a primary sintering temperature of 820°C for 16h, washed with water, and dried to obtain a primary material. The primary material was crushed with a crushing air pressure of 0.6 MPa, washed with water, and then mixed uniformly with $H_3BO_3$ at a mass ratio of B/(Ni+Co+Mn)=0.002. The mixture was sintered at 400°C for 6h, and sieved through a single-layer 325-mesh vibrating sieve to obtain a positive electrode material.

Comparative Example 2:

Comparative Example 2 differs from Example 1 in the positive electrode material preparation method. The positive electrode material preparation method used in Comparative Example 2 is as follows:

A $Ni_{0.8}Co_{0.1}Mn_{0.1}(OH)_2$ precursor was prepared by using continuous co-precipitation method to obtain a precursor with a Span of 1.1, a BET of 22 $m^2$/g, and $D_v50_{a3}$ of 4.5 $\mu$m, and then the precursor and LiOH were mixed at a molar ratio of Li/(Ni+Co+Mn)=1.03. The mixture was subjected to primary sintering at a primary sintering temperature of 870°C for 16h, washed with water, and dried to obtain a primary material. The primary material was crushed with a crushing air pressure of 0.7 MPa, washed with water, and then mixed uniformly with $H_3BO_3$ at a mass ratio of B/(Ni+Co+Mn)=0.002. The mixture was sintered at 400°C for 6h, and sieved through a single-layer 325-mesh vibrating sieve to obtain a positive electrode material.

The lithium-ion batteries prepared in the examples and comparative examples are measured according to the following methods:

Measurement of particle sizes of the positive electrode material before and after ultrasonic treatment: Particle sizes before and after ultrasonic treatment were analyzed using a Mastersizer 3000 laser particle size distribution tester. Laser particle size measurement measures particle size distribution based on a principle that particles of different sizes can cause laser to scatter at different intensities. $D_v50$ is a particle size where the cumulative volume distribution by volume reaches 50% as counted from the small particle size side. $D_v99$ is a particle size where the cumulative volume distribution by volume reaches 99% as counted from the small particle size side. When a laser particle size tester is used to measure the particle sizes before and after ultrasonic treatment, measurement conditions are identical except for the pre-ultrasonic treatment. The dispersant is water, the dispersion method is external ultrasound, the ultrasound time is 5 min, the ultrasound intensity is 40 KHz 180 w, and the sample injection operation is injecting all.

Measurement of particle sizes of primary particles: After positive electrode materials of Examples and Comparative Examples were imaged using a 500x scanning electron microscope (ZEISS Sigma-02-33, Germany), 200 to 600 primary particles of the positive electrode materials that had a complete shape and were not blocked were randomly selected from electron microscope images, and an average value of the longest diameters of the primary particles in the microscope images was recorded as an average particle size.

Cycling performance test: The lithium-ion batteries in the following examples and comparative examples were placed in a 45°C±2°C thermostat and left standing for 2 hours, charged to 4.25 V at a constant current of 1.5C, charged to 0.02C at a constant voltage of 4.25 V and left standing for 15 minutes, and then discharged to 2.8 V at a constant current of 4.0C. This was one charge and discharge cycle, and the first-cycle discharge capacities of the lithium-ion batteries were recorded. The charge/discharge cycle process was repeated for 500 times by using the foregoing method, and the discharge capacity at the 500th cycle was recorded.

Four lithium-ion batteries were taken from each group to calculate an average capacity retention rate of the lithium-ion batteries. Capacity retention rate of lithium-ion battery = Discharge capacity (mAh) at the 500th cycle/Discharge capacity (mAh) at the first cycle × 100%.

Determination of degree of lithium precipitation after cycling: The batteries after cycling were charged to 4.25 V at a constant current of 1.5C, and then disassembled. If the negative electrode is wholly golden yellow and the gray area is less than 2%, it is determined as no lithium precipitation; if most of the negative electrode is golden yellow, but gray can be observed in some positions, and the gray area is between 2% and 20%, it is determined as slight lithium precipitation; if a portion of the negative electrode is gray, but some golden yellow can still be observed, and the gray area is between 20% and 60%, it is determined as moderate lithium precipitation; if most of the negative electrode is gray, and the gray area is more than 60%, it is determined as severe lithium precipitation.

Temperature rise test: The lithium-ion batteries in the examples and comparative examples were placed in a 25°C±2°C thermostat and left standing for 2 hours, charged to 4.25 V at a constant current of 1.5C, charged to 0.02C at a constant voltage of 4.25 V and left standing for 15 minutes, and then discharged to 2.8 V at a constant current of 10C. This was one charge and discharge cycle. Then, such cycle process was performed once again to measure surface temperatures of the lithium-ion batteries. A difference between the surface temperature and initial lithium-ion battery temperature is the temperature rise.

Filterability: Filterability of slurry is measured by the time required for 400 mL of positive electrode slurry to pass through a 300-mesh sieve, in seconds. A shorter time means a better filterability of the slurry.

Separation of first particles and second particles: A part of the positive electrode materials were taken in a drying room with 2% relative humidity, dispersed uniformly in an NMP solution, ultrasonically dispersed for 12h, and stirred uniformly to obtain a suspension including the positive electrode material. The suspension was slowly poured onto a 1500-mesh sieve while being stirred; some small particles passed through the sieve and entered a filtrate, the filtrate was left standing for 24h, supernatant was poured off, and powder obtained after drying was second particles. The remaining large particles were left on the sieve, and the powder obtained after drying was first particles.

Parameters for preparation of positive electrode material in Examples 1 to 12 and Comparative Examples 1 and 2 are shown in Table 1, and test results of Examples 1 to 12 and Comparative Examples 1 and 2 are shown in Table 2.

## Table 1

| Example | Precursor Span | Precursor BET (m²/g) | Precursor $D_v50_{a3}$ (μm) | Primary sintering temperature (°C) | Crushing air pressure (MPa) | Doping element and concentration (ppm) | Coating element and concentration (ppm) | Sieving method |
|---|---|---|---|---|---|---|---|---|
| Example 1 | 0.6 | 10.2 | 10.5 | 820 | 0.4 | None | Al 1000 | Single-layer 325 |
| Example 2 | 0.65 | 11 | 10.5 | 800 | 0.4 | None | Al 1000 | Single-layer 325 |
| Example 3 | 0.75 | 12 | 10.5 | 780 | 0.4 | None | Al 1000 | Single-layer 325 |
| Example 4 | 0.85 | 13 | 10.5 | 780 | 0.5 | None | Al 1000 | Single-layer 325 |
| Example 5 | 0.6 | 10 | 13 | 820 | 0.4 | None | Al 1000 | Single-layer 325 |
| Example 6 | 0.55 | 9 | 16 | 820 | 0.4 | None | Al 1000 | Single-layer 325 |
| Example 7 | 0.55 | 8 | 19.5 | 850 | 0.35 | None | Al 1000 | Single-layer 325 |
| Example 8 | 0.6 | 12 | 8 | 800 | 0.4 | None | Al 1000 | Single-layer 325 |
| Example 9 | 0.62 | 14 | 6 | 800 | 0.4 | None | Al 1000 | Single-layer 325 |
| Example 10 | 0.62 | 16 | 4.5 | 800 | 0.4 | None | Al 1000 | Single-layer 325 |
| Example 11 | 0.64 | 19 | 2.5 | 800 | 0.4 | None | Al 1000 | Single-layer 325 |
| Example 12 | 0.52 | 18 | 2 | 800 | 0.5 | None | Al 1000 | Single-layer 325 |
| Comparative Example 1 | 1.1 | 18 | 4.5 | 820 | 0.6 | None | B 2000 | Single-layer 325 |
| Comparative Example 2 | 1.1 | 22 | 4.5 | 870 | 0.6 | None | B 2000 | Single-layer 325 |

**Table 2**

| Example | $(D_v99_a-D_v99_b)/D_v99_b$ | $(D_v50_a-D_v50_b)/D_v50_b$ | $D_v50_a$ (μm) | $D_v99_a$ (μm) | BET ($m^2/g$) | Particle size of primary particle (μm) | Filterability (400 mL) (s) | Temperature rise (°C) | Cycling capacity retention rate | Lithium precipitation |
|---|---|---|---|---|---|---|---|---|---|---|
| Example 1 | 0.11 | 0.05 | 11.1 | 22.3 | 0.583 | 0.5 | 27.3 | 37.2 | 85% | None |
| Example 2 | 0.23 | 0.06 | 11.0 | 26.0 | 0.632 | 0.5 | 34.6 | 38.7 | 83% | None |
| Example 3 | 0.36 | 0.06 | 10.7 | 32.4 | 0.699 | 0.5 | 52.7 | 39.4 | 82% | None |
| Example 4 | 0.48 | 0.07 | 10.3 | 38.5 | 0.879 | 0.5 | 68.2 | 40.9 | 80% | None |
| Example 5 | 0.06 | 0.03 | 13.2 | 28.4 | 0.422 | 0.6 | 22.1 | 40.1 | 87% | None |
| Example 6 | 0.02 | 0.02 | 16.7 | 29.4 | 0.398 | 0.8 | 19.9 | 45.8 | 89% | Slight |
| Example 7 | 0.02 | 0.02 | 21.5 | 44.2 | 0.356 | 0.92 | 21.2 | 50.4 | 88% | Slight |
| Example 8 | 0.22 | 0.07 | 8.3 | 16.3 | 0.664 | 0.4 | 36.2 | 37.1 | 80% | None |

| Example | (Dv99a–Dv99b)/Dv99b | (Dv50a–Dv50b)/Dv50b | Dv50a (μm) | Dv99a (μm) | BET (m²/g) | Particle size of primary particle (μm) | Filterability (400 mL) (s) | Temperature rise (°C) | Cycling capacity retention rate | Lithium precipitation |
|---|---|---|---|---|---|---|---|---|---|---|
| Example 9 | 0.29 | 0.09 | 6.2 | 13.8 | 0.712 | 0.3 | 45.5 | 36.2 | 78% | None |
| Example 10 | 0.38 | 0.12 | 4.7 | 12.2 | 0.774 | 0.3 | 69.9 | 35.5 | 75% | None |
| Example 11 | 0.49 | 0.15 | 2.8 | 7.9 | 0.886 | 0.2 | 89.4 | 33.6 | 73% | None |
| Example 12 | 0.42 | 0.22 | 2.3 | 5.8 | 0.954 | 0.20 | 114.2 | 34.2 | 70% | None |
| Comparative Example 1 | 0.59 | 0.19 | 4.7 | 14.6 | 0.994 | 0.30 | 114.7 | 38.5 | 62% | Severe |
| Comparative Example 2 | 0.59 | 0.18 | 4.7 | 14.6 | 1.034 | 1.99 | 126.7 | 46.5 | 80% | Moderate |

As shown in Table 1 and Table 2, $(D_v99_a-D_v99_b)/D_v99_b$ of the positive electrode material is adjusted by controlling the Span, BET, primary sintering temperature, and crushing air pressure of the precursors in Examples 1 to 4. A decreased primary sintering temperature decreases the value of $D_v50_a$ to some extent. A larger precursor Span, smaller precursor BET, lower primary sintering temperature, and lower crushing air pressure, leads to a larger value of $(D_v99_a-D_v99_b)/D_v99_b$ of the positive electrode material, a larger value of $D_v99_a$, and larger positive electrode material BET. However, the excessively small Span, precursor BET, and crushing air pressure, and excessively high primary sintering temperature will lead to increased costs and decreased capacity. Therefore, these parameters need to be controlled within a range.

According to Table 2, no or slight lithium precipitation occurs in Examples 1 to 12, while lithium precipitation occurs in both Comparative Examples 1 and 2. In addition, filterability in Comparative Examples 1 and 2 is poor because the values of $(D_v99_a-D_v99_b)/D_v99_b$ and $(D_v50_a-D_v50_b)/D_v50_b$ are too large in Comparative Examples 1 and 2. Filterability of the slurry is mainly affected by the values of $(D_v99_a-D_v99_b)/D_v99_b$ and $(D_v50_a-D_v50_b)/D_v50_b$. When such two values are larger, the positive electrode material particles agglomerate more severely, and the filterability of slurry is poorer. In the case of severe agglomeration of the positive electrode material particles, uneven coating is likely to occur during preparation of the positive electrode, causing local lithium precipitation in a lithium-ion battery. Therefore, it is specified that $0.01 \leq (D_v99_a-D_v99_b)/D_v99_b \leq 0.5$ and $0.01 \leq (D_v50_a-D_v50_b)/D_v50_b \leq 0.15$ in some examples of this application.

According to Table 2, the temperature rise in Comparative Example 2 is highest. This is because the temperature rise is affected by the particle size, $(D_v99_a-D_v99_b)/D_v99_b$ and $(D_v50_a-D_v50_b)/D_v50_b$, where the particle size has the greatest effect. A larger particle size leads to a higher temperature rise. In addition, under the same particle size, larger values of $(D_v99_a-D_v99_b)/D_v99_b$ and $(D_v50_a-D_v50_b)/D_v50_b$ leads to higher temperature rise.

The cycling capacity retention rate in Comparative Example 1 is the lowest. This is because the cycling capacity retention rate is mainly affected by the particle size. A larger particle size leads to a higher cycling capacity retention rate. Under the same particle size, larger values of $(D_v99_a-D_v99_b)/D_v99_b$ and $(D_v50_a-D_v50_b)/D_v50_b$ leads to lower cycling capacity retention rate.

**Table 3**

| Example | Precursor Span | Precursor BET (m²/g) | Precursor D$_V$50$_a$ (μm) | Primary sintering temperature (°C) | Crushing air pressure (MPa) | Doping element and concentration (ppm) | Coating element and concentration (ppm) | Sieving method |
|---|---|---|---|---|---|---|---|---|
| Example 13 | 0.65 | 16 | 4.5 | 850 | 0.6 | Zr 3000 | Al 1000 | Double-layer |
| Example 14 | 0.65 | 16 | 4.5 | 870 | 0.6 | Zr 3000 | Al 1000 | Double-layer |
| Example 15 | 0.65 | 16 | 4.5 | 890 | 0.6 | Zr 3000 | Al 1000 | Double-layer |
| Example 16 | 0.65 | 16 | 4.5 | 890 | 0.6 | Zr 5000 | Al 1000 | Double-layer |

**Table 4**

| Example | $(D_v99_a{-}D_v99_b)/D_v99_b$ | $(D_v50_a{-}D_v50_b)/D_v50_b$ | $D_v50_a$ (μm) | $D_v99_a$ (μm) | Positive electrode material BET (m²/g) | Particle size of primary particle (μm) | Filterability (400 mL) (s) | Temperature rise (°C) | Cycling capacity retention rate | Lithium precipitation after cycling |
|---|---|---|---|---|---|---|---|---|---|---|
| Example 13 | 0.44 | 0.13 | 4.7 | 10.7 | 0.784 | 1.4 | 77.8 | 36.5 | 89% | None |
| Example 14 | 0.37 | 0.12 | 4.9 | 10.2 | 0.752 | 1.9 | 70.4 | 37.2 | 91% | None |
| Example 15 | 0.32 | 0.10 | 5.2 | 9.5 | 0.704 | 2.7 | 52.6 | 38.8 | 93% | None |
| Example 16 | 0.25 | 0.08 | 4.6 | 8.3 | 0.683 | 3.4 | 49.5 | 39.6 | 94% | None |

Parameters for the positive electrode material preparation methods in Examples 13 to 16 are shown in Table 3, and performance test results are shown in Table 4. The values of $(D_v99_a-D_v99_b)/D_v99_b$ and $(D_v50_a-D_v50_b)/D_v50_b$ of the positive electrode materials are adjusted by adjusting the primary sintering temperatures, doping elements and concentrations, and sieving methods in Examples 13 to 16. The sizes of primary particles are also adjusted.

According to comparison between Examples 13 to 16 and Examples 1 to 12, the cycling capacity retention rates of Examples 13 to 16 are significantly higher. This is mainly because the particle sizes of the primary particles are increased to more than 1 $\mu$m in Examples 13 to 16. When the particle sizes of the primary particles (primary particle sizes of the positive electrode materials) are large, the cycling performance is good. According to Examples 13 to 15 in Table 3, the particle sizes of the primary particles can be increased by increasing the primary sintering temperatures. According to Examples 15 and 16 in Table 3, the particle sizes of the primary particles can be increased by adding some doping elements that help melting, such as element Zr, and increasing the primary sintering temperature or adding element Zr also helps lower the values of $(D_v99_a-D_v99_b)/D_v99_b$ and $(D_v50_a-D_v50_b)/D_v50_b$, so that agglomeration is alleviated. Therefore, the average value A of primary particle sizes of the positive electrode materials is limited to be not less than 1 $\mu$m in some examples.

According to comparison of Examples 13 to 16 in Table 4, as the primary particle sizes increase, the temperature rises of the lithium-ion batteries also increase, causing the kinetic performance of the lithium-ion batteries to decrease. In other words, excessively large primary particle sizes may cause deterioration in the lithium-ion battery performance. Therefore, the average value A of the primary particle sizes of the positive electrode materials is limited to be not more than 4 $\mu$m in some examples.

**Table 5**

| Example | First positive electrode material | Second positive electrode material | Mass ratio of first positive electrode material to second positive electrode material |
|---------|-----------------------------------|------------------------------------|---------------------------------------------------------------------------------------|
| Example 17 | Example 5 | Example 8 | 5:5 |
| Example 18 | Example 5 | Example 9 | 5:5 |
| Example 19 | Example 5 | Example 10 | 5:5 |
| Example 20 | Example 5 | Example 11 | 5:5 |
| Example 21 | Example 1 | Example 10 | 5:5 |
| Example 22 | Example 2 | Example 10 | 5:5 |
| Example 23 | Example 3 | Example 10 | 5:5 |
| Example 24 | Example 4 | Example 10 | 5:5 |
| Example 25 | Example 6 | Example 10 | 5:5 |
| Example 26 | Example 8 | Example 10 | 5:5 |
| Example 27 | Example 4 | Example 11 | 5:5 |
| Example 28 | Example 1 | Example 13 | 5:5 |
| Example 29 | Example 1 | Example 14 | 5:5 |
| Example 30 | Example 1 | Example 15 | 5:5 |
| Example 31 | Example 1 | Example 16 | 5:5 |
| Example 32 | Example 1 | Example 15 | 9:1 |
| Example 33 | Example 1 | Example 15 | 7:3 |
| Example 34 | Example 1 | Example 15 | 3:7 |
| Example 35 | Example 1 | Example 15 | 1:9 |

**Table 6**

| Example | $(D_v50_{a2}-D_v50_{b2})/D_v50_{b2}$ | $(D_v99_{a2}-D_v99_{b2})/D_v99_{b2}$ | $(D_v50_{a1}-D_v50_{b1})/D_v50_{b1}$ | $(D_v99_{a1}-D_v99_{b1})/D_v99_{b1}$ | Second particles $D_v50_{a2}$ ($\mu$m) | First particles $D_v50_{a1}$ ($\mu$m) | $D_v50_{a1}/D_v50_{a2}$ | Primary particle size A2 of second particles ($\mu$m) | Primary particle size A1 of first particles ($\mu$m) |
|---|---|---|---|---|---|---|---|---|---|
| Example 17 | 0.09 | 0.28 | 0.02 | 0.04 | 7.9 | 13.6 | 1.7 | 0.35 | 0.69 |
| Example 18 | 0.12 | 0.34 | 0.02 | 0.05 | 5.7 | 13.6 | 2.4 | 0.27 | 0.68 |
| Example 19 | 0.15 | 0.45 | 0.03 | 0.04 | 4.3 | 13.4 | 3.1 | 0.27 | 0.66 |
| Example 20 | 0.18 | 0.56 | 0.02 | 0.06 | 2.4 | 13.3 | 5.5 | 0.20 | 0.68 |
| Example 21 | 0.17 | 0.52 | 0.04 | 0.06 | 4.1 | 11.8 | 2.9 | 0.28 | 0.52 |
| Example 22 | 0.19 | 0.66 | 0.05 | 0.11 | 3.9 | 11.7 | 3.0 | 0.28 | 0.53 |
| Example 23 | 0.19 | 0.79 | 0.05 | 0.15 | 3.7 | 11.4 | 3.1 | 0.26 | 0.57 |
| Example 24 | 0.24 | 0.87 | 0.05 | 0.19 | 3.4 | 11.2 | 3.3 | 0.27 | 0.55 |
| Example 25 | 0.14 | 0.43 | 0.02 | 0.02 | 4.1 | 17.2 | 4.2 | 0.24 | 0.82 |
| Example 26 | 0.25 | 0.64 | 0.05 | 0.10 | 3.8 | 8.9 | 2.3 | 0.32 | 0.57 |
| Example 27 | 0.29 | 0.98 | 0.07 | 0.24 | 2.5 | 10.5 | 4.2 | 0.25 | 0.59 |
| Example 28 | 0.14 | 0.49 | 0.04 | 0.07 | 4.2 | 11.6 | 2.8 | 1.24 | 0.57 |
| Example 29 | 0.13 | 0.53 | 0.03 | 0.06 | 4.4 | 11.7 | 2.7 | 1.73 | 0.58 |

(continued)

| Example | $(D_v50_{a2}-D_v50_{b2})/D_v50_{b2}$ | $(D_v99_{a2}-D_v99_{b2})/D_v99_{b2}$ | $(D_v50_{a1}-D_v50_{b1})/D_v50_{b1}$ | $(D_v99_{a1}-D_v99_{b1})/D_v99_{b1}$ | Second particles $D_v50_{a2}$ (µm) | First particles $D_v50_{a1}$ (µm) | $D_v50_{a1}/D_v50_{a2}$ | Primary particle size A2 of second particles (µm) | Primary particle size A1 of first particles (µm) |
|---|---|---|---|---|---|---|---|---|---|
| Example 30 | 0.12 | 0.47 | 0.04 | 0.08 | 4.7 | 11.9 | 2.5 | 2.38 | 0.55 |
| Example 31 | 0.09 | 0.36 | 0.04 | 0.07 | 4.1 | 11.5 | 2.8 | 2.26 | 0.53 |
| Example 32 | 0.14 | 0.54 | 0.05 | 0.07 | 4.6 | 12.2 | 2.7 | 2.01 | 0.56 |
| Example 33 | 0.13 | 0.51 | 0.05 | 0.07 | 4.7 | 12.1 | 2.6 | 2.13 | 0.55 |
| Example 34 | 0.12 | 0.41 | 0.04 | 0.06 | 4.9 | 11.7 | 2.4 | 2.55 | 0.57 |
| Example 35 | 0.11 | 0.35 | 0.03 | 0.05 | 5.1 | 11.3 | 2.2 | 2.63 | 0.58 |

**Table 7**

| Example | Filterability (400 mL) (s) | Temperature rise (°C) | Cycling capacity retention rate | Lithium precipitation after cycling |
|---|---|---|---|---|
| Example 17 | 31.4 | 38.7 | 82% | None |
| Example 18 | 35.5 | 38.5 | 81% | None |
| Example 19 | 51.4 | 37.5 | 79% | None |
| Example 20 | 79.8 | 35.8 | 75% | None |
| Example 21 | 54.2 | 36.0 | 79% | None |
| Example 22 | 59.2 | 36.6 | 78% | None |
| Example 23 | 65.3 | 37.1 | 77% | None |
| Example 24 | 68.8 | 37.4 | 77% | None |
| Example 25 | 47.4 | 38.2 | 81% | None |
| Example 26 | 58.4 | 36.4 | 77% | None |
| Example 27 | 82.6 | 37.2 | 75% | None |
| Example 28 | 64.3 | 38.4 | 90% | None |
| Example 29 | 64.9 | 39.6 | 92% | None |
| Example 30 | 45.7 | 40.8 | 94% | None |
| Example 31 | 41.5 | 42.1 | 94% | None |
| Example 32 | 31.6 | 37.8 | 87% | None |
| Example 33 | 36.7 | 40.1 | 92% | None |
| Example 34 | 47.2 | 41.7 | 92% | None |
| Example 35 | 50.6 | 42.1 | 92% | None |

In Examples 17 to 35, any two of the positive electrode materials in Examples 1 to 16 are mixed. The mixing ratios are shown in Table 5. Physical parameters for Examples 17 to 35 are shown in Table 6, and performance test results are shown in Table 7.

In Table 5, the particle size of the first positive electrode material is larger than that of the second positive electrode material; in Examples 17 to 27, combinations of large particle polycrystalline and small particle polycrystalline are used; In Examples 28 to 35, combinations of large particle polycrystalline and small particle mono-crystalline are used; and in Examples 32 to 35, different mass ratios are used. According to Table 7, in Examples 15 to 35, different mixing methods are used, but no lithium precipitation occurs after cycling, and the cycling capacity retention rates are good. Therefore, as long as the positive electrode material can satisfy $1\% \leq (D_v 99_a - D_v 99_b)/D_v 99_b \leq 50\%$ and $1\% \leq (D_v 50_a - D_v 50_b)/D_v 50_b \leq 15\%$, the lithium-ion batteries will not experience lithium precipitation and can maintain a good cycling capacity retention rate.

The foregoing descriptions are only preferred examples of this application and explanations of the applied technical principles. Those skilled in the art should understand that the scope of disclosure involved in this application is not limited to the technical solutions formed by the specific combination of the above technical features, and should also cover other technical solutions formed by any combination of the above technical features or their equivalent features without departing from the above disclosed concept, For example, a technical solution formed by replacement between the foregoing characteristics and technical characteristics having similar functions disclosed in this application.

**Claims**

1. A positive electrode material, **characterized in that**:

the positive electrode material comprises at least one of element Al or element Zr; and

positive electrode material particles satisfies $0.01 \leq (D_v99_a - D_v99_b)/D_v99_b \leq 0.5$,
wherein $D_v99_a$ and $D_v99_b$ are $D_v99$ values of the positive electrode material particles measured before and after ultrasonic treatment respectively.

2. The positive electrode material according to claim 1, wherein the positive electrode material particles satisfies:

$$0.01 \leq (D_v50_a - D_v50_b)/D_v50_b \leq 0.30,$$

wherein $D_v50_a$ and $D_v50_b$ are $D_v50$ values of the positive electrode material particles measured before and after ultrasonic treatment respectively.

3. The positive electrode material according to claim 1, **characterized in that** the positive electrode material satisfies at least one of the following conditions (a) to (d):

(a) $D_v50_a$ satisfies $2 \ \mu m \leq D_v50_a \leq 17 \ \mu m$;
(b) $D_v99_a$ satisfies $6 \ \mu m \leq D_v99_a \leq 40 \ \mu m$;
(c) a specific surface area BET of the positive electrode material satisfies $0.1 \ m^2/g \leq BET \leq 0.9 \ m^2/g$; and
(d) the positive electrode material comprises primary particles, and an average particle size A of the primary particles satisfies $200 \ nm \leq A \leq 4 \ \mu m$,

wherein $D_v50_a$ is a $D_v50$ value of the positive electrode material particles measured before ultrasonic treatment.

4. The positive electrode material according to claim 1, **characterized in that** the positive electrode material satisfies at least one of conditions (e) to (i):

(e) $D_v50_a$ satisfies $3 \ \mu m \leq D_v50_a \leq 6 \ \mu m$;
(f) $D_v99_a$ satisfies $8 \ \mu m \leq D_v99_a \leq 30 \ \mu m$;
(g) a specific surface area BET of the positive electrode material satisfies $0.5 \ m^2/g \leq BET \leq 0.8 \ m^2/g$;
(h) an average particle size A in primary particles of the positive electrode material satisfies $1 \ \mu m \leq A \leq 4 \ \mu m$; and
(i) a mass percentage of element Al in the positive electrode material ranges from 0.05% to 0.5%,
wherein $D_v50_a$ is a $D_v50$ value of the positive electrode material particles measured before ultrasonic treatment.

5. The positive electrode material according to claim 1, **characterized in that**, the positive electrode material comprises first particles and second particles, a particle size of the first particle is D1, a particle size of the second particle is D2, and D2<D1.

6. The positive electrode material according to claim 5, **characterized in that** the first particles satisfies at least one of the following conditions (j) and (k):

(j) $0.01 \leq (D_v50_{a1} - D_v50_{b1})/D_v50_{b1} \leq 0.1$; and
(k) $0.01 \leq (D_v99_{a1} - D_v99_{b1})/D_v99_{b1} \leq 0.25$,
wherein $D_v50_{a1}$ and $D_v50_{b1}$ are $D_v50$ values of the first particles measured before and after ultrasonic treatment respectively, and $D_v99_{a1}$ and $D_v99_{b1}$ are $D_v99$ values of the first particles measured before and after ultrasonic treatment respectively.

7. The positive electrode material according to claim 5, **characterized in that**, the second particles satisfies at least one of the following conditions (1) and (m):

(1) $0.05 \leq (D_v50_{a2} - D_v50_{b2})/D_v50_{b2} \leq 0.3$; and
(m) $0.2 \leq (D_v99_{a2} - D_v99_{b2})/D_v99_{b2} \leq 1$,
wherein $D_v50_{a2}$ and $D_v50_{b2}$ are $D_v50$ values of the second particles measured before and after ultrasonic treatment respectively, and $D_v99_{a2}$ and $D_v99_{b2}$ are $D_v99$ values of the second particles measured before and after ultrasonic treatment respectively.

8. The positive electrode material according to claim 5, **characterized in that**, the first particles and the second particles satisfy at least one of conditions (n) to (p):

(n) $7\ \mu m \leq D_v 50_{a1} \leq 15\ \mu m$;
(o) $2\ \mu m \leq D_v 50a_2 \leq 8\ \mu m$; and
(p) $1.5 \leq D_v 50_{a1}/D_v 50_{a2} \leq 5.5$,
wherein $D_v 50_{a1}$ and $D_v 50_{a2}$ are $D_v 50$ values of the first particles and the second particles measured before ultrasonic treatment respectively.

9. The positive electrode material according to claim 5, **characterized in that**, the first particles comprises primary particles, and an average particle size $A_1$ of the primary particles in the first particles satisfies $300\ nm \leq A_1 \leq 800\ nm$; and/or

the second particles comprises primary particles, and an average particle size $A_2$ of the primary particles in the second particles satisfies $0.2\ \mu m \leq A_2 \leq 4\ \mu m$.

10. An electrochemical apparatus, comprising:

a positive electrode;
a negative electrode; and
a separator disposed between the positive electrode and the negative electrode,
wherein the positive electrode comprises a positive electrode current collector and a positive electrode active substance layer disposed on the positive electrode current collector, and the positive electrode active substance layer comprises the positive electrode material according to any one of claims 1 to 9.

11. An electronic apparatus, comprising the electrochemical apparatus according to claim 10.

## INTERNATIONAL SEARCH REPORT

| | International application No. |
|---|---|
| | **PCT/CN2021/104957** |

**A. CLASSIFICATION OF SUBJECT MATTER**

H01M 4/505(2010.01)i; H01M 4/525(2010.01)i; H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT; WPI; EPODOC; CNKI: 锂, 电池, 正极, 阴极, 超声波, 前, 后, Al, 铝, Zr, 锆, 颗粒, 尺寸, 粒径, D?50, D?99, lithium, battery, cell, positive, cathode, ultrasonic, before, after, aluminum, zirconium, particle, size

**C. DOCUMENTS CONSIDERED TO BE RELEVANT**

| Category* | Citation of document, with indication, where appropriate, of the relevant passages | Relevant to claim No. |
|---|---|---|
| PX | CN 112687869 A (NINGDE AMPEREX TECHNOLOGY LTD.) 20 April 2021 (2021-04-20) claims 1-11 | 1-11 |
| Y | CN 110416511 A (NINGDE AMPEREX TECHNOLOGY LTD.) 05 November 2019 (2019-11-05) description paragraphs 2, 30-65 | 1-11 |
| Y | CN 107112536 A (MITSUBISHI CHEMICAL CORPORATION) 29 August 2017 (2017-08-29) description paragraphs 263-277, experiment C2, tables 7-9 | 1-11 |
| A | CN 105161693 A (HUNAN SOUNDDON NEW ENERGY CO., LTD.) 16 December 2015 (2015-12-16) entire document | 1-11 |
| A | CN 110892571 A (HITACHI CHEMICAL CO., LTD.) 17 March 2020 (2020-03-17) entire document | 1-11 |
| A | CN 107799764 A (JINCHUAN GROUP CO., LTD. et al.) 13 March 2018 (2018-03-13) entire document | 1-11 |

☑ Further documents are listed in the continuation of Box C.     ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **15 September 2021** | **28 September 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| | International application No. |
|---|---|
| | **PCT/CN2021/104957** |

**C.    DOCUMENTS CONSIDERED TO BE RELEVANT**

| Category* | Citation of document, with indication, where appropriate, of the relevant passages | Relevant to claim No. |
|---|---|---|
| A | US 2019393466 A1 (NINGDE AMPEREX TECHNOLOGY LIMITED) 26 December 2019 (2019-12-26)<br>    entire document | 1-11 |

Form PCT/ISA/210 (second sheet) (January 2015)

**INTERNATIONAL SEARCH REPORT**
**Information on patent family members**

International application No.

**PCT/CN2021/104957**

| Patent document cited in search report | | | Publication date (day/month/year) | Patent family member(s) | | | Publication date (day/month/year) |
|---|---|---|---|---|---|---|---|
| CN | 112687869 | A | 20 April 2021 | None | | | |
| CN | 110416511 | A | 05 November 2019 | WO | 2021012705 | A1 | 28 January 2021 |
| | | | | CN | 110416511 | B | 25 December 2020 |
| CN | 107112536 | A | 29 August 2017 | US | 2018013146 | A1 | 11 January 2018 |
| | | | | EP | 3246974 | B1 | 04 November 2020 |
| | | | | WO | 2016113952 | A1 | 21 July 2016 |
| | | | | US | 2020185721 | A1 | 11 June 2020 |
| | | | | EP | 3246974 | A1 | 22 November 2017 |
| | | | | EP | 3246974 | A4 | 20 December 2017 |
| | | | | KR | 20170103003 | A | 12 September 2017 |
| | | | | JP | 6746918 | B2 | 26 August 2020 |
| | | | | JP | 2017050184 | A | 09 March 2017 |
| | | | | JP | 2016136517 | A | 28 July 2016 |
| | | | | JP | 2017027771 | A | 02 February 2017 |
| | | | | JP | 6736845 | B2 | 05 August 2020 |
| CN | 105161693 | A | 16 December 2015 | CN | 105161693 | B | 23 November 2018 |
| CN | 110892571 | A | 17 March 2020 | CN | 110612626 | A | 24 December 2019 |
| | | | | JP | 2020177931 | A | 29 October 2020 |
| | | | | WO | 2018207333 | A1 | 15 November 2018 |
| | | | | TW | 201902014 | A | 01 January 2019 |
| | | | | KR | 20190141172 | A | 23 December 2019 |
| | | | | WO | 2018207410 | A1 | 15 November 2018 |
| | | | | JP | WO2018207896 | A1 | 14 May 2020 |
| | | | | JP | 2020177932 | A | 29 October 2020 |
| | | | | US | 2021135220 | A1 | 06 May 2021 |
| | | | | TW | 201902013 | A | 01 January 2019 |
| | | | | JP | 6747587 | B2 | 26 August 2020 |
| | | | | JP | WO2018207410 | A1 | 14 May 2020 |
| | | | | WO | 2018207896 | A1 | 15 November 2018 |
| | | | | JP | 6747588 | B2 | 26 August 2020 |
| CN | 107799764 | A | 13 March 2018 | None | | | |
| US | 2019393466 | A1 | 26 December 2019 | EP | 3588613 | A1 | 01 January 2020 |
| | | | | CN | 108878748 | A | 23 November 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011560549